Europäisches Patentamt

European Patent Office

Office européen des brevets

(19)

(11) EP 1 385 019 A1

(12) **DEMANDE DE BREVET EUROPEEN**

(43) Date de publication:
28.01.2004 Bulletin 2004/05

(51) Int Cl.⁷: **G01S 7/28**

(21) Numéro de dépôt: 03102026.6

(22) Date de dépôt: 04.07.2003

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **26.07.2002 FR 0209533**

(71) Demandeur: **Thales**
**75008 Paris (FR)**

(72) Inventeurs:
• **GARNIER, Gérard Thales Intellectual Property**
**94117 Cedex ARCUEIL (FR)**
• **ZOLESIO, Jean-Luc Thales Intellectual Property**
**94117 Cedex ARCUEIL (FR)**

(74) Mandataire: **Lucas, Laurent Jacques et al**
**THALES Intellectual Property,**
**31-33 Avenue Briand**
**94117 Arcueil Cedex (FR)**

(54) **Dispositif d'antibrouillage notamment pour radars à antennes actives à réseaux de modules**

(57) La présente invention concerne un dispositif d'antibrouillage applicable notamment aux radars équipés d'antennes actives à réseaux de modules.

L'invention comporte une antenne active constituée de réseaux de modules regroupés en sous-ensembles présentant des lobes de réseaux dont les répartitions spatiales sont différentes d'un sous-ensemble à l'autre.

L'invention comporte également un traitement d'antibrouillage du signal reçu par chaque sous-ensemble. Ce traitement utilise les signaux reçus par les sous-réseaux qui composent les autres sous-ensembles.

L'invention s'applique notamment au traitement des problèmes de brouillage par les lobes de réseaux, des systèmes comportant des antennes actives à réseaux de modules.

Fig. 1

EP 1 385 019 A1

**Description**

La présente invention concerne un dispositif d'antibrouillage notamment pour radars à antennes actives à réseaux de modules. Ce dispositif est destiné à éliminer, sans avoir recours à leur détection préalable, les éventuels signaux brouilleurs qui peuvent notamment être reçus par les lobes de réseaux accompagnant les faisceaux des antennes actives à réseaux modules.
Ce dispositif est applicable à tous les systèmes comportant des antennes constituées de modules actifs d'émission / réception.

Du fait de leur modularité les antennes actives, constituées de modules unitaires d'émission / réception, présentent un grand nombre d'avantages. C'est en particulier le cas en ce qui concerne l'application aux radars, auxquels ces antennes offrent de nouvelles capacités de gestion de l'espace à contrôler. On peut citer par exemple la possibilité de créer plusieurs lobes d'antennes ou faisceaux, orientés dans des directions différentes et permettant des observations simultanées de différentes zones de l'espace. De telles antennes appelées antennes multifaisceaux permettent notamment aux radars qui les utilisent d'effectuer simultanément plusieurs types de tâches, telles que des tâches d'observation et des tâches de guidage missile par exemple.
On peut également citer la possibilité de disposer d'un gain d'antenne variable suivant la direction de l'espace observée. Le gain peut par exemple être minimisé dans certaines directions de l'espace, de façon à créer des zones aveugles dans les directions d'où proviennent des signaux indésirables. Dans la suite du document ces signaux seront qualifiés de "signaux brouilleurs".
Les méthodes de lutte contre les signaux brouilleurs procèdent généralement par analyse et traitement, après numérisation, des signaux provenant des voies de réception fournies par l'antenne radar. En ce qui concerne les antennes composées de modules actifs, il est connu d'effectuer des groupements de modules permettant d'obtenir un nombre de voies de réception suffisant pour effectuer un traitement d'antibrouillage. Ces regroupements de modules sont généralement appelés réseaux. L'ensemble des réseaux constitue l'antenne globale. Sur les antennes actuelles, les modules sont généralement regroupés en réseaux identiques, selon une disposition géométrique régulière, mono ou bidimensionnelle. En outre dans les applications existantes, les signaux issus des différents réseaux sont combinés avant traitement pour former le signal correspondant à l'antenne globale.
Les traitements d'antibrouillage associés aux antennes à réseaux consistent généralement à appliquer des coefficients pondérateurs aux signaux issus des différents réseaux, puis à effectuer leur recombinaison. Ces coefficients sont déterminés de façon à minimiser le gain de l'antenne globale dans la direction d'arrivée du signal brouilleur, avec la contrainte de conserver un gain suffisant dans la direction d'observation. La combinaison de ces signaux pondérés constitue alors le signal de réception global.

Le regroupement des modules d'antenne en réseaux présente l'avantage de limiter le nombre de voies de réception tout en conservant une certaine modularité à l'antenne. En revanche les centres de phase de ces réseaux sont distants les uns des autres d'une longueur généralement bien supérieure à la longueur d'onde du signal émis. Selon un phénomène connu par ailleurs, ils présentent donc l'inconvénient d'entraîner la formation de lobes de réseaux. Ces lobes de réseaux apparaissent lors de la formation de faisceaux dont la direction n'est pas perpendiculaire au plan de phase de l'antenne.
Les lobes de réseaux se présentent comme des répliques parasites périodiques d'un faisceau donné. Ils sont orientés dans des directions différentes de celle du faisceau. L'orientation des directions pointées par les lobes de réseaux présente une périodicité spatiale. Le nombre de Lobes de réseau créés ainsi que la valeur de leur périodicité est fonction de la distance qui sépare les centres de phase des réseaux. Cette distance est fixée par la disposition des modules sur l'antenne et la géométrie des réseaux constitués.
L'existence des lobes de réseaux est par ailleurs intrinsèquement lié à celle du faisceau, de sorte que si l'on diminue le gain de l'antenne dans la direction d'un lobe de réseau, on diminue de la même façon le gain de l'antenne dans la direction du faisceau. Inversement, le maintien de la valeur du gain dans la direction du faisceau s'accompagne d'un maintien du gain au niveau des lobes de réseaux.
Face à un brouillage par un lobe de réseau, un traitement d'antibrouillage tel que celui décrit précédemment, se trouve mis en défaut quel que soit l'ensemble des coefficients de pondération appliqués aux signaux issu de chaque sous-réseau. Selon que l'algorithme mis en oeuvre par le traitement privilégie la nécessité de respecter la contrainte de gain dans la direction du faisceau ou celle de diminuer le gain dans la direction du brouilleur, le traitement sera inopérant sur le brouilleur ou aura pour conséquence d'atténuer significativement le gain de l'antenne dans la direction du faisceau. Le compromis généralement réalisé consiste en une diminution du gain permettant d'affaiblir le niveau de brouillage par le lobe de réseau sans trop affaiblir le niveau du signal provenant du faisceau. Cependant, afin de ne pas dégrader de manière systématique les performances du système qui utilise l'antenne, cette opération n'est réalisée que lorsqu'un brouilleur est détecté. Le traitement d'antibrouillage est ainsi généralement associé à une procédure de détection de brouilleur.

Un but de l'invention est notamment de pallier les inconvénients précités. A cet effet l'invention a pour objet un dispositif comportant une antenne à réseaux de modules comportant au moins deux sous-ensembles. Chaque sous-ensemble se comporte comme une antenne indépendante. L'arrangement des modules en réseaux diffère d'un sous-ensemble à l'autre, de sorte que pour des directions de faisceaux identiques, les répartitions spatiales des lobes de réseaux sont différentes. Le dispositif comporte également un traitement systématique des signaux issus de chacun des sous-ensembles. Ce traitement réalise l'élimination des brouilleurs reçus par chaque sous-ensemble, au moyen des signaux issus des réseaux composant les autres sous-ensembles. Après traitement, les signaux issus de chacun des sous-ensembles sont recombinés pour former le signal résultant de l'antenne globale.

Ce dispositif a notamment pour avantage de permettre l'élimination des brouilleurs quelle que soit leur origine et en particulier des brouilleurs agissants au travers des lobes de réseaux.

Le principe de traitement appliqué aux signaux issus des différents sous-ensembles a pour caractéristique avantageuse de ne pas dégrader sensiblement le gain de l'antenne dans les directions observées et peut donc avantageusement être appliqué à priori, sans détection préalable de brouilleurs.

D'autres caractéristiques et avantages apparaîtront au travers de la description qui suit. Cette description s'appuie sur les figures annexées qui représentent :

La figure 1, L'illustration d'un exemple possible de réalisation d'une antenne selon l'invention. Le cas considéré est ici celui d'une antenne plane à deux sous-ensembles juxtaposés.

Les figures 2 et 3, des illustrations du principe de traitement appliqué aux signaux issus des différents sous-ensembles.

La figure 4, une illustration des effets produits par le traitement appliqué, sur un signal brouilleur reçu par l'antenne.

Le nombre de sous-ensembles composant l'antenne du dispositif selon l'invention, résulte d'un choix qui est notamment fonction du nombre de voies de réception que peut gérer le dispositif et en particulier l'élément qui réalise le traitement d'antibrouillage. Dans la suite du document, pour des raisons de clarté de description on considérera une antenne comportant deux sous-ensembles.

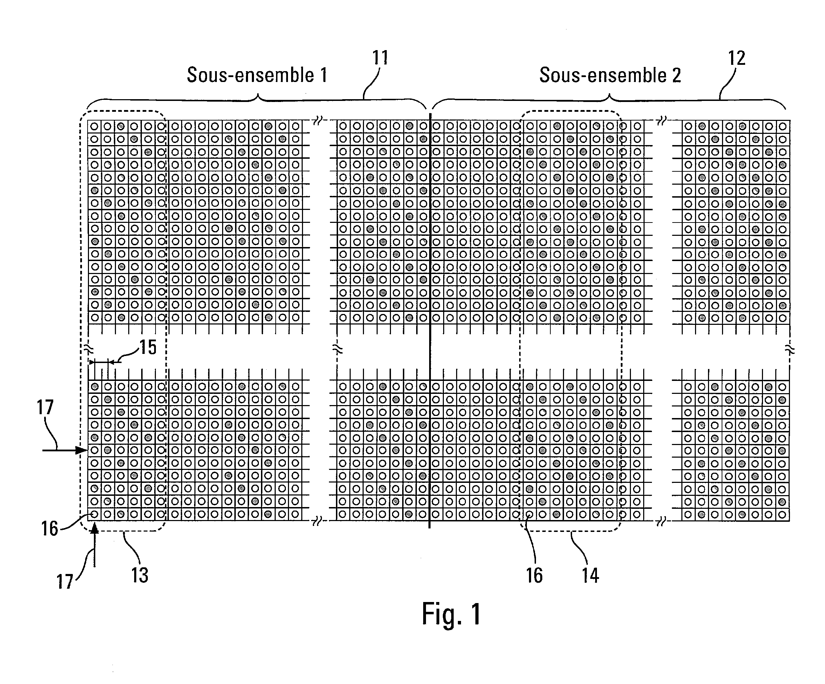

La figure 1 illustre un exemple simple de réalisation d'une antenne selon l'invention.

Comme il a été dit précédemment, un problème important auquel sont confrontées les antennes à réseaux de modules est lié à l'apparition de lobes de réseaux. Ces lobes de réseaux représentent un effet parasite induit par la décomposition en réseaux, cette décomposition étant par ailleurs rendue nécessaire pour limiter le nombre de voies de réception à traiter

Pour résoudre le problème posé par les lobes de réseaux, le dispositif selon l'invention utilise une approche différente. Cette approche consiste à décomposer l'antenne en sous-ensembles, chaque sous-ensemble étant constitué d'un certain nombre de modules actifs regroupés en réseaux. La structure géométrique des réseaux, ainsi que le nombre de modules qui compose un réseau, sont différents d'un sous-ensemble à l'autre.

L'antenne prise comme exemple sur la figure 1 est une antenne de forme rectangulaire comportant des modules actifs 16 régulièrement répartis dans un plan sur des rangées 17, lignes ou colonnes. Cette antenne est partagée en deux sous-ensembles 11 et 12, chaque sous-ensemble comportant par exemple le même nombre P de modules, afin que les gains globaux des deux sous-ensembles soient sensiblement les mêmes.

En revanche, le regroupement des modules en réseaux 13 et 14 est différent. Le sous-ensemble 1 est par exemple constitué de réseaux 13 formés de $N_1$ colonnes de modules tandis que le sous-ensemble 2 est constitué de réseaux 14 formés de $N_2$ colonnes de modules. Les nombres $N_1$ et $N_2$ sont notamment choisis en ce qu'ils sont premiers entre eux.

La répartition des modules en réseaux de tailles différentes suivant le sous-ensemble considéré, induit un positionnement et un écartement des centres de phases des réseaux, qui diffère d'un sous-ensemble à l'autre. L'écartement des centres de phases correspondants aux réseaux du sous-ensemble 1 prend une valeur $D_1$, tandis que celui des centres de phase correspondant au sous-ensemble 2 prend une valeur $D_2$. Si on appelle d la distance séparant deux modules on peut écrire :

$$D_1 = N_1 \ast d \qquad et \qquad D_2 = N_2 \ast d$$

Cet écartement différent des centres de phase engendre une répartition spatiale des lobes de réseaux différente d'un sous-ensemble à l'autre. En effet, des calculs menés par ailleurs montrent que pour une même direction de faisceau, les deux sous-ensembles 1 et 2 présenteront des lobes de réseaux orientés dans une même direction à la condition que l'on puisse trouver deux nombres entiers non nuls $K_1$ et $K_2$ tels que l'on ait à la fois :

$$\begin{cases} K_1/N_1 = K_2/N_2 & (1) \\ K_1 \cdot \lambda/D_1 < 1 \quad \text{et} \quad K_2 \cdot \lambda/D_2 < 1 & (2) \end{cases}$$

avec $D_1 = N_1 \cdot d$ et $D_2 = N_2 \cdot d$.

Le rapport $d/\lambda$ est ici inférieur à 1, dans la mesure où l'on considère que l'espacement des modules sur l'antenne ne produit pas intrinsèquement de lobes de réseaux.

Si comme dans le cas de la figure 1 les nombres $N_1$ et $N_2$ sont premiers entre eux, on constate que les entiers les plus petits qui satisfont la condition (1) sont :

$$K_1 = N_1 \qquad \text{et} \qquad K_2 = N_2 \qquad (3)$$

Or, sachant que l'on a $d/\lambda < 1$, les valeurs $K_1 = N_1$ et $K_2 = N_2$ ne permettent pas de satisfaire la condition (2). Dans ce cas les sous-ensembles 1 et 2 ne présentent donc pas de lobes de réseaux communs. Par conséquent un signal brouilleur perturbant le sous-ensemble 1 au travers d'un lobe de réseau, aura peu d'effets perturbateurs sur le sous-ensemble 2, et réciproquement.

L'exemple d'antenne présenté sur la figure 1 comporte ainsi 70 rangées de modules, réparties en deux sous-ensembles. Les sous-ensembles comportant respectivement sept réseaux de cinq rangées de modules pour le sous-ensemble 1 et cinq réseaux de sept rangées de modules pour le sous-ensemble 2. Les rangées comportent par ailleurs le même nombre de modules. Dans cet exemple, $N_1$ est donc égal à 5, tandis que $N_2$ vaut 7. $N_1$ et $N_2$ étant premiers entre eux, les deux sous-ensembles ainsi réalisé présenteront des lobes de réseaux dont les directions seront différentes.

La figure 1 présente un exemple possible de réalisation d'une antenne selon l'invention. Cet exemple n'est bien entendu pas limitatif et Il existe d'autres moyens de réaliser une antenne ayant les caractéristiques citées précédemment, comme par exemple la répartition des modules d'antennes non pas en réseaux juxtaposés mais en réseaux imbriqués. De même, le principe de réalisation présenté peut être appliqué à une antenne comportant plus de deux sous-ensembles. Le but étant notamment de réaliser des sous-ensembles présentant des lobes de réseaux ayant des directions différentes. Ainsi, un brouilleur perturbant la réception d'un des sous-ensembles au travers d'un des ses lobes de réseaux, ne perturbera pas la réception des autres sous-ensembles. Il pourra être détecté comme tel et éliminé.

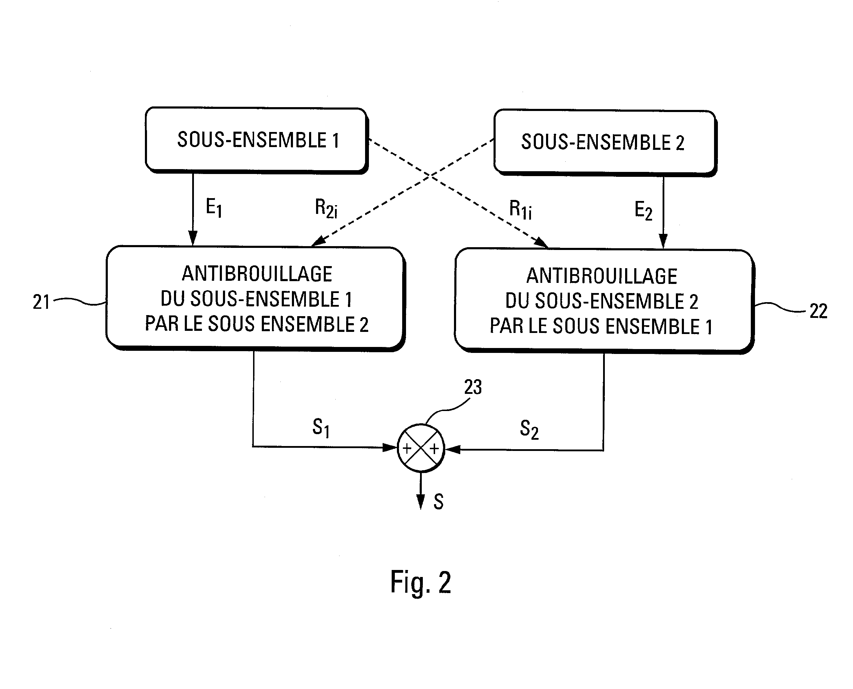

La figure 2 Illustre le principe de traitement mise en oeuvre par le dispositif selon l'invention. Ce traitement repose notamment sur la décomposition de l'antenne en sous-ensembles présentant des lobes de réseaux différents. Du fait de la décomposition de l'antenne en deux sous-ensembles, le signal E reçu par l'antenne peut se décomposer en une somme que l'on peut écrire :

$$E = E_1 + E_2 \qquad (4)$$

Le traitement d'antibrouillage du dispositif selon l'invention met à profit cette décomposition en réalisant simultanément deux opérations 21 et 22 indépendantes.

L'opération 21 consiste à réaliser l'antibrouillage du signal $E_1$ à l'aide des $N_2$ signaux $R_{2i}$, issus des $N_2$ voies de réception des réseaux composant le sous-ensemble 2. Le signal $E_1$ est issu de la combinaison des voies de réception des $N_1$ réseaux composant le sous-ensemble 1 et représente le signal global reçu par le sous-ensemble 1.

Après élimination des éventuels signaux brouilleurs le traitement délivre un signal $S_1$.

L'opération 22, réciproque de l'opération 21 consiste quant à elle à réaliser l'antibrouillage du signal $E_2$ à l'aide des $N_1$ signaux $R_{1i}$, issus des $N_1$ voies de réception des réseaux composant le sous-ensemble 1. Le signal $E_2$ est issu de la combinaison des voies de réception des $N_2$ réseaux composant le sous-ensemble 2 et représente le signal global reçu par le sous-ensemble 2.

Après élimination des éventuels signaux brouilleurs le traitement délivre un signal $S_2$.

Les signaux antibrouillés $S_1$ et $S_2$ étant obtenus, l'étape suivante du traitement d'antibrouillage consiste par exemple à effectuer la somme 23 des signaux $S_1$ et $S_2$ pour obtenir le signal de sortie S.

Le signal S obtenu a pour avantage d'être sensiblement équivalent au signal E débarrassé des composantes correspondant aux signaux brouilleurs, notamment de celles correspondant au brouillage d'un des sous-ensembles par les lobes de réseaux.

L'utilisation des signaux $R_{2i}$ et $R_{1i}$ par le traitement permet de tirer un parti avantageux de la décomposition en réseaux. En effet Pour un sous-ensemble donné, les sous-réseaux composant l'autre sous-ensemble se comporte comme autant d'antennes auxiliaires indépendantes permettant d'éliminer des signaux brouilleurs.

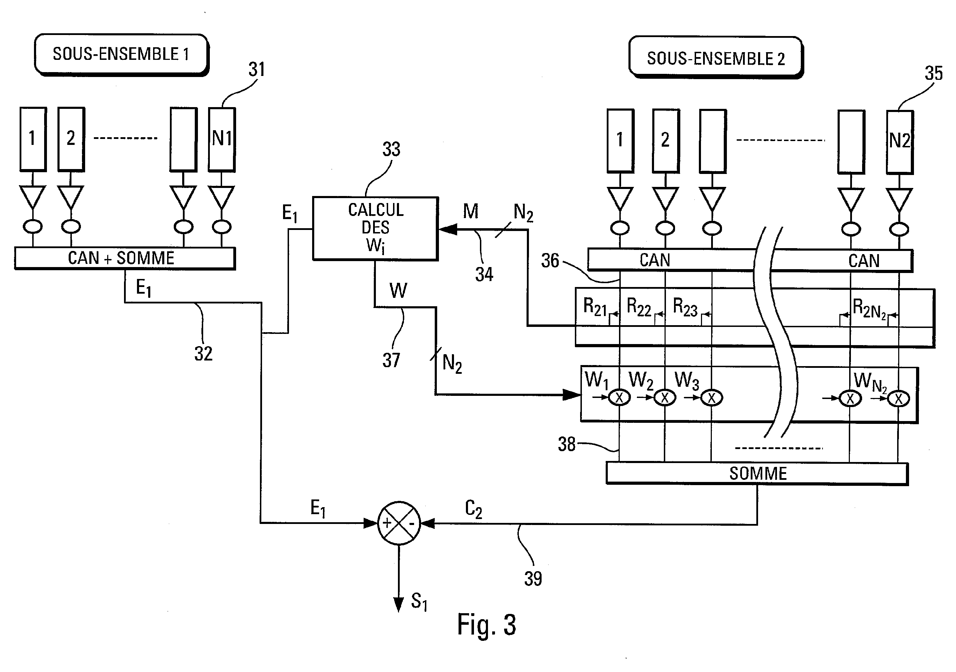

La figure 3 détaille le fonctionnement de l'antibrouillage du sous-ensemble 1 par le sous-ensemble 2. Les signaux issus des sous-réseaux 31 qui composent le sous-ensemble 1 sont sommés après numérisation et forment le signal numérique 32 ou signal $E_1$. $E_1$ qui se présente comme une suite d'échantillons temporels est de la forme $\{E_{11}, E_{12},...,E_{1n}\}$.

La fonction de traitement du signal 33 associe les échantillons qui composent le signal $E_1$ aux échantillons temporels qui composent, après numérisation, les signaux 36 issus des sous-réseaux 35 du sous-ensemble 2. Cette fonction 33 a pour rôle d'élaborer un jeu 37 de $N_2$ coefficients correcteurs $W_i$ qui sont appliqués aux échantillons temporels qui composent les signaux 36. Les signaux corrigés 38 sont ensuite sommés pour former le signal 39 ou signal $C_2$ qui est soustrait au signal $E_1$ pour former le signal antibrouillé $S_1$. $C_2$ qui se présente comme une suite d'échantillons temporels est de la forme $\{C_{21}, C_{22},...,C_{2n}\}$. Pour l'instant d'échantillonnage n par exemple, le signal $C_2$ peut s'exprimer de la façon suivante :

$$C_{2n} = W_{1n\,*}\,R_{1n} + W_{2n\,*}\,R_{2n} + ... + W_{N2n\,*}\,R_{N2n} \quad (5) \tag{5}$$

ou encore, si l'on suppose que W est une grandeur stationnaire:

$$C_{2n} = W_{1*}\,R_{1n} + W_{2\,*}R_{2n}+...+W_{N2\,*}\,R_{N2n} \tag{6}$$

Les coefficients $R_{1n}$, ..., $R_{N2n}$ sont élaborés de telle sorte que le signal $C_2$ présente un niveau sensiblement égal au signal $E_1$ dans toutes les directions de l'espace, excepté dans celle correspondant à la direction du faisceau pour laquelle $C_2$ présente un niveau minimum, voire sensiblement nul. Ainsi, en soustrayant le signal $C_2$ au signal $E_1$ on obtient un signal $S_1$ débarrassé de ses composantes parasites.

La fonction 33 qui réalise l'élaboration des coefficients qui fait appel à des calculs connus, n'est pas décrite ici. Le principe étant par exemple de procéder à la corrélation des signaux issus des différents réseaux du sous-ensemble 2 et du signal $E_1$ sous-la condition que le gain du résultat soit nul dans la direction du faisceau. Autrement dit, elle effectue notamment la recherche du vecteur $\{W\}$ des coefficients de correction, tel que l'on ait :

$$|M|^* \times \{W\}-\{E1\}=0 \tag{7}$$

avec la contrainte :

$$\Sigma W_i = 0 \tag{8}$$

Le vecteur W peut s'écrire :

$$W = |W_1\ W_2\ W_3\ ...\ W_{N2}| \tag{9}$$

M* représente ici la transposée de la matrice M regroupant m échantillons temporels des $N_2$ signaux 36 issus des sous-réseaux 35 du sous-ensemble 2.

M peut par exemple s'écrire de la façon suivante :

$$M = \begin{vmatrix} R_{11} & R_{12} & R_{13} & ... & R_{1m} \\ R_{21} & R_{22} & R_{23} & ... & R_{2m} \\ ... & ... & ... & ... & ... \\ R_{N_2 1} & R_{N_2 2} & R_{N_2 3} & ... & R_{N_2 m} \end{vmatrix} \tag{10}$$

EP 1 385 019 A1

La contrainte $\Sigma W_i=0$ traduit le fait que le signal corrigé doit avoir un niveau sensiblement nul dans la direction du faisceau.

L'élaboration des composantes de W est par exemple effectuée de manière glissante à partir m échantillons consécutifs

Le traitement d'antibrouillage du sous-ensemble 1 par le sous-ensemble 2 présente notamment deux avantages :

- C'est un traitement systématique qui n'est pas subordonné à la détection préalable d'un signal $E_1$ particulier. Cet avantage rend le traitement des signaux reçus séquentiellement moins complexe.
- C'est un traitement qui minimise les pertes infligées au signal reçu dans la direction du faisceau.

Ce traitement est appliqué de manière symétrique sur le sous-ensemble 2. Il conduit à l'obtention d'un signal $S_2$ débarrassé comme $S_1$ de ses composantes parasites.

Après avoir opéré l'antibrouillage des deux sous-ensembles l'un par l'autre, on peut reconstituer le signal S reçu par l'antenne global en additionnant par exemple les signaux $S_1$ et $S_2$.

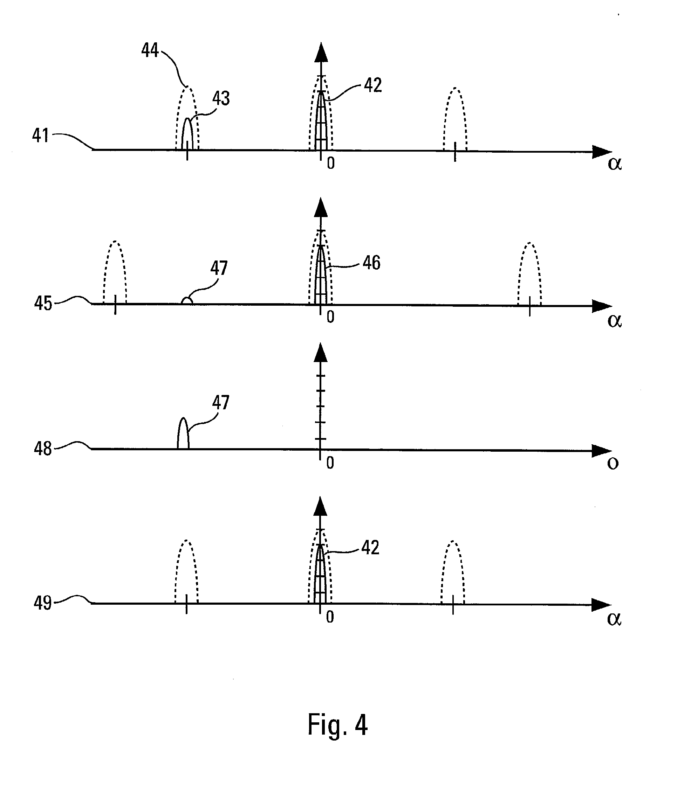

La figure 4 donne une représentation graphique des effets du traitement d'antibrouillage décrit précédemment. Ces effets portent sur le signal reçu par le sous-ensemble 1 ainsi que sur le gain du sous-ensemble 1 dans la direction du faisceau. Sur la figure, les formes en traits pleins représentent un niveau de signal reçu, tandis que les formes en traits pointillés représentent le gain du sous-ensemble dans la direction du faisceau et dans celles correspondant à des lobes de réseaux. L'axe des abscisses correspond à l'écart angulaire entre l'axe du faisceau dont l'abscisse est 0, et la direction considérée. L'axe des ordonnées correspond, sur une échelle logarithmique par exemple, au niveau de signal et au gain du sous-ensemble.

Pour des raisons de simplicité les gains sont représentés comme étant identiques pour les deux sous-ensembles.

Le cas pris en exemple sur la figure 4 illustre est celui du sous-ensemble 1 recevant un signal utile dans la direction du faisceau et un signal brouilleur au travers d'un de ses lobes de réseaux.

Le graphe 41 présente en traits pleins le signal 42 correspondant à un écho utile et le signal 43 correspondant à un écho brouilleur, tels qu'ils sont reçus par le sous-ensemble 1. Le signal brouilleur 43 étant reçu au travers d'un lobe de réseau 44, il bénéficie d'un gain important et présente donc un niveau important.

Le graphe 45 présente en trait plein les signaux 46 et 47, correspondant aux mêmes échos tels qu'ils sont reçus par le sous-ensemble 2 en l'absence de correction. La direction du signal brouilleur correspondant à la direction d'un lobe de réseau du sous-ensemble 1, il n'est reçu par le sous-ensemble 2 que de manière très atténuée au travers d'un lobe secondaire d'antenne ou d'un lobe diffus.

Le graphe 48 représente le signal corrigé 39. Ce signal résulte de la sommation des signaux issus des réseaux qui composent le sous-ensemble 2, après application du jeu de coefficients W. L'effet de la correction appliquée est matérialisé par la disparition du signal utile 42, consécutive à l'annulation du gain du sous-ensemble 2 dans la direction du faisceau et l'ajustement du niveau du signal 47. Le signal 47 est porté à un niveau sensiblement égal à celui du signal 43 qui correspond au même brouilleur mais vu par le sous-ensemble 1.

Le graphe 49 représente le signal issu du sous-ensemble 1 après application du traitement d'antibrouillage. Ce signal résulte de la soustraction du signal représenté sur le graphe 48 au signal représenté sur le graphe 41. L'effet de la correction appliquée est matérialisé par la disparition sensiblement complète du signal brouilleur 43 et la conservation du signal utile 43 avec un niveau sensiblement inchangé.

L'illustration de la figure 4 montre les effets du traitement d'antibrouillage sur le sous-ensemble 1. Ces effets sont bien entendu conjugués aux effets d'un traitement similaire, appliqué au sous-ensemble 2. Après traitement les signaux issus des deux sous-ensembles sont par exemple recombinés pour former le signal de réception de l'antenne globale.

Le type de brouillage présenté à la figure 4 s'avère particulièrement difficile à combattre pour un système équipé d'une antenne classique. La seule solution envisageable dans un tel cas consiste à atténuer suffisamment le gain dans la direction de l'écho brouilleur pour que la gêne occasionnée par le signal 42 soit faible. Cependant, s'agissant d'un brouillage par un lobe de réseau, la diminution du gain dans la direction du lobe de réseau s'accompagne nécessairement de la diminution équivalente du gain dans la direction du faisceau ce qui se traduit par une baisse des performances du système. C'est pourquoi dans les systèmes équipés d'antennes classiques, les traitements d'antibrouillage ne sont mis en oeuvre que si un brouilleur est préalablement détecté.

La figure 4 illustre le moyen de contourner la difficulté mis avantageusement en oeuvre par le dispositif selon l'invention. A travers de cette figure on peut constater que la mise en oeuvre du traitement d'antibrouillage peut ici être systématique. En effet, l'absence de brouilleur se traduit sur la figure par l'absence des signaux 43 et 47, absence qui ne modifie pas sensiblement le niveau du signal 42 obtenu après traitement. Le graphe 48 ne fait figurer dans ce cas aucun signal à soustraire au signal issu du sous-ensemble 1.

Le dispositif selon l'invention permet donc la mise en oeuvre d'un traitement d'antibrouillage qui ne nécessite pas une opération préalable de détection de brouilleur.

**Revendications**

1. Dispositif d'antibrouillage pour radar, **caractérisé en ce qu'**il comporte au moins :

   - une antenne active comportant au moins deux sous-ensembles (11, 12) comportant des modules regroupés en réseaux (13, 14) dont les centres de phase présentent une disposition différente pour chaque sous-ensemble.
   - des moyens de traitement (21, 22) des signaux (32) issus de chaque sous-ensemble, réalisant l'élimination des signaux reçus par les lobes de réseaux d'un sous-ensemble, au moyen des signaux (36) issus des réseaux constituant les autres sous-ensembles.

2. Dispositif selon la revendication 1, **caractérisé en ce que** les signaux issus de chacun des sous-ensembles sont recombinés après traitement pour constituer un signal sensiblement équivalent au signal issu de l'antenne global, débarrassé des composantes reçues par les lobes de réseaux.

3. Dispositif selon l'une quelconque des revendications 1 à2, **caractérisé en ce que** les modules (16) de l'antenne active sont régulièrement répartis sur des rangées (17) et sont regroupés en au moins deux types de réseaux (13, 14) de taille différente qui comportent des rangées de modules en nombres premiers entre eux, les réseaux de même taille constituant un même sous-ensemble.

4. Dispositif selon la revendication précédente, **caractérisé en ce que** les réseaux qui regroupent les modules de l'antenne active constituent des sous-ensembles (11, 12) juxtaposés.

5. Dispositif selon la revendication 3, **caractérisé en ce que** les réseaux qui regroupent les modules de l'antenne active constituent des sous-ensembles enchevêtrés.

6. Dispositif selon l'une quelconque des revendications précédentes, **caractérisé en ce que** les moyens de traitements réalisent pour chaque sous-ensemble la soustraction au signal (32) issu de ce sous-ensemble, d'un signal (39) égal à la somme pondérée des signaux (36) issus des réseaux constituant les autres sous-ensembles.

7. Dispositif selon la revendication précédente, **caractérisé en ce que** le calcul des coefficients de pondération est effectué avec une contrainte de gain minimum dans la direction du faisceau pour le signal somme (39).

8. Application du dispositif selon l'une quelconque des revendications précédentes à l'élimination d'un signal brouilleur quelconque.

9. Dispositif selon l'une quelconque des revendications 1 à 7, **caractérisé en ce qu'**il réalise de manière systématique l'antibrouillage des signaux reçus par l'antenne sans nécessiter la détection préalable de la présence d'un signal brouilleur.

10. Antenne active à réseaux de modules actifs, **caractérisée en ce qu'**elle comporte des modules actifs (16) régulièrement répartis sur des rangées (17), ces modules étant regroupés en au moins deux types de réseaux (13, 14) de taille différente qui comportent des rangées de modules en nombres premiers entre eux, les réseaux de même taille constituant un même sous-ensemble.

11. Antenne active selon la revendication précédente, **caractérisée en ce qu'**elle comporte un arrangement des réseaux constituant des sous-ensembles (11, 12) juxtaposés.

12. Antenne active selon la revendication 10, **caractérisée en ce qu'**elle comporte un arrangement des réseaux, constituant des sous-ensembles enchevêtrés.

Sous-ensemble 1          11          Sous-ensemble 2          12

Fig. 1

Fig. 2

9

Fig. 3

Fig. 4

# EP 1 385 019 A1

**Office européen des brevets**

## RAPPORT DE RECHERCHE EUROPEENNE

Numéro de la demande

EP 03 10 2026

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 100 36 132 A (VOLKSWAGENWERK AG) 7 février 2002 (2002-02-07) * abrégé * * page 2, ligne 38 - page 4, ligne 1 * --- | 1,10 | G01S7/28 |
| A | MITCHELL M ET AL: "Adaptive digital beamforming (ADBF) architecture for wideband phased-array radars" RADAR SENSOR TECHNOLOGY IV, ORLANDO, FL, USA, 8 APRIL 1999, [en ligne] vol. 3704, pages 36-47, XP002238510 Proceedings of the SPIE - The International Society for Optical Engineering, 1999, SPIE-Int. Soc. Opt. Eng, USA ISSN: 0277-786X Extrait de l'Internet: <URL:http://www.gtri.gatech.edu/jot/mitche ll/mitchellr.html> [extrait le 2003-04-16] * le document en entier * --- | 1,10 | |
| A | GOFFER A P ET AL: "DESIGN OF PHASED ARRAYS IN TERMS OF RANDOM SUBARRAYS" IEEE TRANSACTIONS ON ANTENNAS AND PROPAGATION, IEEE INC. NEW YORK, US, vol. 42, no. 6, 1 juin 1994 (1994-06-01), pages 820-826, XP000454399 ISSN: 0018-926X * abrégé * * I. Introduction * --- | 1,10 | DOMAINES TECHNIQUES RECHERCHES (Int.Cl.7)<br><br>G01S<br>H01Q |
| A | US 5 262 790 A (RUSSO PASQUALE) 16 novembre 1993 (1993-11-16) * abrégé * ----- | 1,10 | |

Le présent rapport a été établi pour toutes les revendications

| Lieu de la recherche | Date d'achèvement de la recherche | Examinateur |
|---|---|---|
| LA HAYE | 19 novembre 2003 | Roost, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 10 2026

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre  indicatif et n'engagent pas la responsabilité de l'Office européen des brevets.

19-11-2003

| Document brevet cité au rapport de recherche | | Date de publication | Membre(s) de la famille de brevet(s) | | Date de publication |
|---|---|---|---|---|---|
| DE 10036132 | A | 07-02-2002 | DE | 10036132 A1 | 07-02-2002 |
| US 5262790 | A | 16-11-1993 | IT | 1240854 B | 17-12-1993 |
| | | | CA | 2064717 A1 | 01-12-1991 |
| | | | EP | 0484490 A1 | 13-05-1992 |
| | | | WO | 9119332 A1 | 12-12-1991 |
| | | | JP | 5501187 T | 04-03-1993 |